# FASCICULE DE BREVET EUROPEEN

(11) **EP 0 469 937 B1**
(45) Date de publication et mention de la délivrance du brevet: **07.09.1994**
(21) Numéro de dépôt: 91401751.2
(22) Date de dépôt: 27.06.1991
(51) Int. Cl.: B60T 13/57

(54) **Procédé de réglage de la valeur du saut d'un servomoteur pneumatique d'assistance au freinage et servomoteur pour la mise en oeuvre de ce procédé**
Einstellverfahren für den Schwellenwert eines pneumatischen Bremskraftverstärkers und Servomotors zur Durchführung dieses Verfahrens
Threshold valve adjusting method for a pneumatic brake booster and servomotor to carry out this method

(30) Priorité: 31.07.1990 FR 9009750
(43) Date de publication de la demande: 05.02.1992
(73) Titulaire: ALLIEDSIGNAL EUROPE SERVICES TECHNIQUES, 93700 Drancy (FR)
(72) Inventeur: Verbo, Ulysse, Bendix Europe, F-93700 Drancy (FR); Gautier, Jean-Pierre, Bendix Europe, F-93700 Drancy (FR)
(74) Mandataire: Bentz, Jean-Paul

(56) Documents cités:
- EP-A- 0 340 059
- EP-A- 0 352 392
- DE-A- 3 510 844
- GB-A- 2 074 270

## Description

La présente invention concerne les servomoteurs d'assistance au freinage pour, en particulier les véhicules automobiles et s'applique plus particulièrement au réglage du saut de tels servomoteurs.

Un servomoteur d'assistance au freinage tel que défini ci-dessus comprend généralement une tige de commande qui se déplace vers l'avant du véhicule lorsque son conducteur actionne la pédale de frein. Ce déplacement de la tige de commande est transmis à un élément appelé plongeur qui actionne à son tour des moyens d'assistance. En général, ces moyens d'assistance consistent en une valve à trois voies dont la fonction est d'interrompre la communication entre les chambres avant et arrière du servomoteur, dans lesquelles règne en position de repos, la même pression réduite, et de mettre la chambre arrière en relation avec une source de pression sous une pression supérieure de façon à créer une différence de pression sur les deux faces d'un piston séparant ces deux chambres. Le piston se déplace alors vers l'avant en étant solidaire d'une tige de sortie ou tige de poussée agissant à son tour sur un maître-cylindre engendrant alors une augmentation de pression dans le circuit hydraulique de freinage du véhicule pour freiner ce dernier.

De façon connue, le piston servant à transmettre la force d'assistance à la tige de sortie ou tige de poussée agit sur cette dernière au travers d'un disque de réaction réalisé en un matériau déformable tel qu'un élastomère. Au repos, un faible jeu existe entre l'extrémité avant du plongeur et le disque de réaction. L'extrémité arrière du plongeur forme un siège de valve annulaire coaxial à un autre siège de valve annulaire formé sur le piston, un organe formant clapet coopérant avec ces sièges de valve.

Dans de tels servomoteurs, la réaction à la pédale de frein ne commence à apparaître que lorsque la force d'assistance engendrée par le servomoteur dépasse un certain seuil. Ce seuil est appelé le "saut" du servomoteur. Il constitue une caractéristique importante du servomoteur. En effet, si l'existence du saut est imposée pour une réponse immédiate des freins lors de l'actionnement de la pédale, les constructeurs de véhicules souhaitent généralement que la valeur de ce saut reste dans certaines limites pour que l'assistance n'atteigne pas une valeur trop grande sans augmentation de la réaction à la pédale de frein.

Cependant, compte tenu notamment des tolérances de fabrication des différentes pièces constituant le servomoteur, il peut exister des différences importantes dans la valeur du saut d'un servomoteur à un autre dans une production en série.

On connaît par le document FR-A-2 480 898 un procédé de réglage de la valeur du saut d'un servomoteur, procédé selon lequel on ajuste le jeu existant entre la face avant du plongeur et le disque de réaction. Ce procédé présente de nombreux inconvénients en ce sens qu'il est long et compliqué et que de plus il nécessite pour sa mise en oeuvre l'utilisation de moyens ultra-sonores ou de chauffage pour déformer de manière plastique une partie de valve comportant une pièce supplémentaire entre le plongeur et le disque de réaction. L'inconvénient majeur de ce procédé réside de plus dans le fait que le réglage doit être effectué avant l'assemblage du disque de réaction, et par conséquent du servomoteur lui-même. Il s'ensuit que les différentes pièces doivent être soigneusement appariées.

On connaît par ailleurs, grâce au document EP-A-0 340 059, un servomoteur d'assistance au freinage dans lequel la valeur du saut est réglée par vissage d'un capot sur le piston pneumatique et déformation du disque de réaction.

Bien que cette solution soit techniquement satisfaisante, elle suppose l'emploi, pour le disque de réaction, d'un matériau de qualité supérieure capable de résister à la déformation permanente ainsi introduite, et n'est de toute façon applicable qu'aux servomoteurs non encore assemblés puisque l'accès au capot n'est possible que du côté de la tige de poussée.

La présente invention a donc pour but un procedé de réglage de la valeur du saut d'un servomoteur qui soit de mise en oeuvre simple et rapide, de façon fiable et peu onéreuse, et qui puisse en outre être appliqué à un servomoteur après son assemblage.

Dans ce but, la présente invention propose un procédé de réglage de la valeur du saut d'un servomoteur d'assistance au freinage, servomoteur dans lequel sont montés de façon mobile un piston creux d'assistance, une tige de commande portant un plongeur logé dans le piston, l'extrémité arrière du plongeur formant un premier siège de valve annulaire concentrique à un second siège de valve annulaire porté par le piston d'assistance, les premier et second sièges de valve coopérant avec un clapet annulaire porté par le piston d'assistance, un disque de réaction étant interposé entre une face avant annulaire du piston d'assistance et une face arrière d'une tige de poussée, procédé caractérisé en ce qu'il comprend les étapes suivantes :
- appliquer à la tige de poussée un effort égal à la force d'assistance correspondant au saut désiré du servomoteur,
- éloigner le siège du piston d'assistance du clapet
- mettre en contact la face avant du palpeur et la face arrière du disque de réaction, et maintenir ce contact pendant l'étape suivante,
- mettre en contact le siège du piston d'assistance avec le clapet pour écarter celui-ci du premier siège, et
- relacher l'effort appliqué à la tige de poussée.

La présente invention a également pour but de réaliser un servomoteur d'assistance au freinage dont le saut soit réglable de façon simple, rapide, fiable et peu onéreuse, ce réglage pouvant être effectué sur le servomoteur déjà assemblé.

Dans ce but, la présente invention propose un servomoteur d'assistance au freinage dans lequel sont montés de façon mobile un piston creux d'assistance, une tige de commande portant un plongeur logé dans une partie tubulaire arrière du piston, l'extrémité arrière du plongeur formant un premier siège de valve annulaire concentrique à un second siège de valve annulaire porté par le piston d'assistance, les premier et second sièges de valve coopérant avec un clapet annulaire porté par le piston d'assistance, un disque de réaction étant interposé entre une face avant annulaire du piston d'assistance et une face arrière d'une tige de poussée,caractérisé en ce que la position du second siège de valve par rapport à la face avant annulaire du piston d'assistance est réglable.

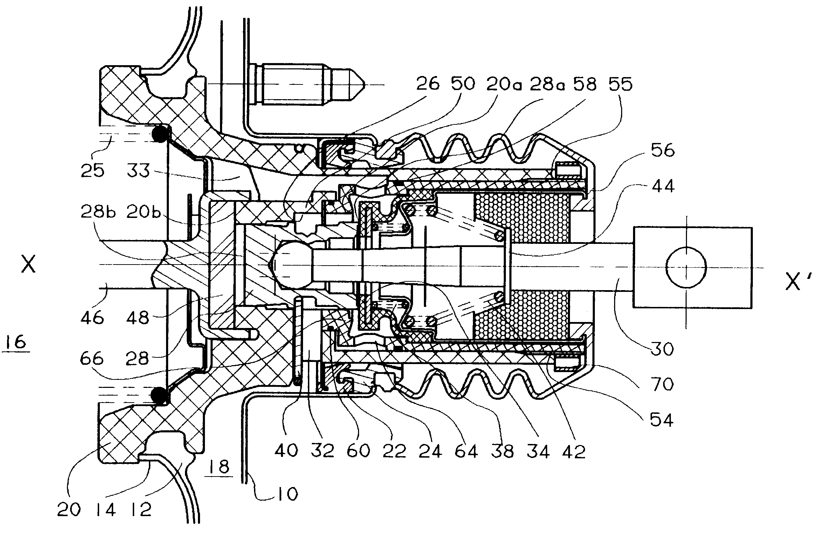

Un mode de réalisation particulier de la présente invention va maintenant être décrit à titre d'exemple illustratif en référence au dessin annexé sur lequel :
- la Figure unique est une vue de côté, en coupe longitudinale, représentant la partie centrale d'un servomoteur d'assistance au freinage dont la valeur du saut peut être réglée conformément à l'invention.

La Figure unique représente en coupe la partie centrale d'un servomoteur d'assistance au freinage prévu pour être placé de façon conventionnelle entre la pédale de frein d'un véhicule et le maître-cylindre commandant le circuit de freinage hydraulique de ce véhicule. Par convention, on appelle "avant" du servomoteur la partie de ce dernier tournée vers le maître-cylindre et "arrière" du servomoteur la partie tournée vers la pédale de frein. Sur la Figure, l'avant est à gauche et l'arrière est à droite.

Le servomoteur de la Figure comprend une enveloppe extérieure 10 en forme de coquille, présentant une symétrie de révolution autour d'un axe X-X. Seule la partie centrale arrière de cette enveloppe 10 est représentée sur la Figure.

Une membrane souple en élastomère 12, renforcée dans sa partie centrale par un disque support métallique 14, définit à l'intérieur de l'espace délimité par l'enveloppe 10 une chambre avant 16 et une chambre arrière 18 . Le bord périphérique extérieur (non représenté) de la membrane 12 est fixé de façon étanche sur l'enveloppe extérieure 10. Le bord périphérique intérieur de cette même membrane se termine par un bourrelet reçu de façon étanche dans une gorge annulaire formée sur la surface périphérique extérieure d'un piston creux d'assistance 20 disposé selon l'axe X-X du servomoteur. Ce piston creux 20 se prolonge vers l'arrière par une partie tubulaire qui traverse de façon étanche la paroi arrière de l'enveloppe 10. L'étanchéité de cette traversée est assurée par un joint d'étanchéité annulaire armé 22 qui est fixé par une bague 24 dans une partie centrale tubulaire prolongeant vers l'arrière la paroi arrière de l'enveloppe 10.

Un ressort de compression 25 interposé entre le piston 20 et la paroi avant (non représentée) de l'enveloppe extérieure 10 maintient normalement le piston dans sa position arrière de repos illustrée sur la Figure, dans laquelle la chambre arrière 18 présente son volume minimal et la chambre avant 16 son volume maximal.

Dans sa partie centrale située entre la partie arrière tubulaire et la partie avant dans laquelle est fixée la membrane 12, le piston 20 présente un alésage étagé 26 dans lequel est reçu en coulissement un plongeur 28 présentant également une symétrie de révolution autour de l'axe X-X. L'extrémité avant d'une tige de commande 30 du servomoteur, disposée également selon l'axe X-X, est montée rotulante dans le plongeur 28. L'extrémité arrière de cette tige 30, qui fait saillie à l'extérieur de la partie tubulaire du piston 20, est commandée directement par la pédale de frein du véhicule.

L'espace annulaire situé entre la tige de commande 30 et la partie tubulaire du piston communique avec l'extérieur à l'arrière du servomoteur. Vers l'avant, ce même espace annulaire peut communiquer avec la chambre arrière 18 au travers d'un passage radial 32 formé dans la partie centrale du piston, lorsque une valve à trois voies est actionnée. Cette valve à trois voies comporte un clapet annulaire 34 monté dans la partie tubulaire du piston et deux sièges de valve annulaires 20a et 28a formés respectivement sur la partie centrale du piston 20 et sur le plongeur 28.

Le clapet 34 constitue l'extrémité avant, de plus petit diamètre, d'un manchon souple en élastomère dont l'extrémité arrière se termine par un bourrelet monté de façon étanche à l'intérieur de la partie tubulaire du piston 20. Ce bourrelet est maintenu en place par une coupelle métallique 36, sur laquelle prend appui un ressort de compression 38 tendant à déplacer le clapet 34 vers l'avant.

Le siège de valve annulaire 28a est formé sur la face d'extrémité arrière du plongeur 28. De façon comparable, le siège de valve 20a est formé sur la face d'extrémité arrière de la partie centrale du piston 20, autour du siège 28a. Selon la position du plongeur 28 à l'intérieur du piston 20, cet agencement permet au clapet 34 d'être constamment en appui étanche avec l'un au moins des sièges de valve 28a et 20a sous l'action du ressort 38.

Un second passage 33 est formé dans la partie centrale du piston 20, approximativement parallèlement à son axe X-X, pour faire communiquer la chambre avant 16 du servomoteur avec une chambre annulaire formée autour du clapet 34, à l'intérieur de la partie tubulaire du piston. Lorsque le plongeur 28 occupe sa position arrière de repos illustrée sur la Figure, dans laquelle le clapet 34 est en appui étanche sur le siège 28a du plongeur et écarté du siège 20a du piston, les chambres avant 16 et arrière 18 du servomoteur communiquent ainsi entre elles par les passages 33 et 32.

De façon connue, au moins un organe de butée 40 monté dans la partie centrale du piston 20 délimite la course axiale du plongeur 28 à l'intérieur de ce dernier. Le plongeur 28 est normalement maintenu dans sa position arrière de repos définie par l'organe 40 au moyen d'un ressort de compression 42 interposé entre la coupelle 36 et une rondelle 44 elle-même en appui sur un épaulement formé sur la tige de commande 30.

Dans sa partie centrale, le piston 20 comprend une face avant annulaire 20b au centre de laquelle débouche l'alésage 26. Cette face avant annulaire 20b du piston 20 agit sur la face arrière d'une tige de poussée 46 au travers d'un disque de réaction 48 en un matériau déformable tel qu'un élastomère. De façon plus précise, la tige de poussée 46 et le disque de réaction 48 sont disposés selon l'axe X-X du servomoteur, dans le prolongement de la tige de commande 30 et du plongeur 28.

Lorsque le servomoteur est installé sur un véhicule, la chambre avant 16 communique en permanence avec une source de vide.

Dans un premier temps, l'enfoncement de la pédale de frein par le conducteur du véhicule a pour effet d'égaler l'effort de précontrainte du ressort 42 diminué de l'effort de précontrainte du ressort 38. Au cours du léger déplacement qui s'ensuit, les chambres avant 16 et arrière 18 du servomoteur sont alors isolées l'une de l'autre. Dans cette première phase de l'actionnement du servomoteur,la force exercée sur la tige de commande 30 n'engendre aucune force sur la tige de poussée 46 à la sortie du servomoteur.

Dans une deuxième phase de l'actionnement du frein, le plongeur est déplacé suffisamment vers l'avant pour que le clapet 34 soit en contact étanche avec le siège 20a du piston et espacé du siège 28a du plongeur. Dans ces conditions, la chambre arrière 18 du servomoteur est isolée de la chambre avant 16 et communique avec l'atmosphère. Une force d'assistance est donc engendrée qui tend à déplacer le piston 20 vers l'avant. Ce déplacement est transmis à la tige de poussée 46 par le disque de réaction 48.

Au cours de cette deuxième phase d'actionnement des freins, la force d'assistance exercée par le piston 20 ne déforme pas suffisamment le disque de réaction 48 pour que ce dernier remplisse totalement l'espace qui le sépare initialement du plongeur 28. Par conséquent, la force de sortie appliquée au maître-cylindre par la tige de sortie 46 augmente brutalement, alors que la force exercée sur la tige de commande 30 reste inchangée.

Cette augmentation brusque de l'effort de sortie correspond au saut du servomoteur, c'est à dire au seuil au delà duquel la force d'assistance engendrée dans le servomoteur et exercée sur le disque de réaction 48 par le piston 20 devient suffisante pour que la face avant 28b du plongeur vienne au contact du disque de réaction 48.

Dans une troisième phase de l'actionnement des freins, toute augmentation de l'effort exercé par le conducteur sur la tige de commande 30 engendre une augmentation de la force d'assistance exercée sur le piston, qui se traduit par une augmentation de la réaction à la pédale exercée par le disque 48 sur le plongeur 28, alors au contact l'un de l'autre.

Au cours des deuxième et troisième phases, la face avant du clapet 34 et les sièges 20a et 28a sont pratiquement alignés. On appelle cette position "position d'équilibre".

D'après les explications qui précèdent, on comprend bien que le saut du servomoteur, c'est à dire la valeur de l'augmentation brusque de l'effort de sortie aussi bien que le moment où elle intervient pendant le mouvement du plongeur 28 par rapport au piston 20, soit encore la deuxième phase décrite plus haut, est d'une importance capitale pour le fonctionnement du servomoteur. Cependant, comme déjà indiqué, en fonction des tolérances de fabrication des différentes pièces constituant le servomoteur et des matériaux composant le disque de réaction, il peut exister des différences importantes dans la valeur du saut, d'un servomoteur à un autre, dans une production en série.

Conformément à la présente invention, il est proposé un procédé de réglage pour diminuer ou même annuler la plage de variation du saut du servomoteur due aux diverses tolérances de fabrication, ou même pour obtenir un servomoteur pouvant posséder toute valeur de saut désirée,et ce sans avoir à démonter le servomoteur.

Conformément à la présente invention, le piston 20 du servomoteur est réalisé en deux parties, et plus précisément dans sa partie tubulaire arrière. La partie centrale du piston 20 dans laquelle est formé l'alésage étagé 26 présente un prolongement cylindrique 50 dirigé vers l'arrière, et la partie tubulaire arrière forme un alésage étagé 52 dont l'extrémité arrière possède un filetage intérieur 54. Dans l'alésage 52 est disposé de façon étanche un manchon 56. Plus précisément, l'étanchéité entre le manchon 56 et le piston 20 est assurée par un joint 58 dans la partie arrière de plus grand diamètre de l'alésage 52, par un joint 60 dans la partie avant de plus petit diamètre de l'alésage 52,et par un joint 62 autour du prolongement cylindrique 50 autour duquel vient s'engager de façon étanche le manchon 56.Le manchon 56 comporte à son extrémité arrière un filetage extérieur 55 destiné à coopérer avec le filetage 54 formé à l'extrémité arrière de la partie tubulaire arrière du piston 20 de façon à solidariser le piston 20 et le manchon 56.

Le manchon 56 présente des ouvertures 64 dans sa partie située entre les joints 58 et 60 de façon à faire communiquer l'espace situé à l'intérieur du manchon 56 avec le passage 33. L'extrémité avant du manchon 56 comporte une partie 66 s'étendant radialement vers l'intérieur en direction de l'axe X-X et qui délimite une ouverture circulaire autour du plongeur 28 et de diamètre supérieur à celui de ce dernier.

Le manchon souple dont l'extrémité avant forme le clapet 34, la coupelle 36, le ressort 38 et le ressort 42 sont disposés à l'intérieur du manchon 56 d'une manière analogue à celle des servomoteurs classiques. On comprend donc que le servomoteur réalisé conformément à l'invention peut fonctionner de la façon décrite plus haut, à ceci près que le siège de valve 20a est formé sur la partie avant 66 du manchon 56 porté par le piston 20, et non pas sur le piston 20 lui-même.

Par contre, une fois le servomoteur complètement assemblé, il sera très facile d'en modifier la valeur du saut, soit que cette dernière ait été jugée inacceptable, soit que l'on désire lui donner une valeur particulière, et ceci sans qu'il soit nécessaire de démonter le servomoteur.

En effet, on comprend bien d'après les explications qui précèdent que, en vissant ou dévissant plus ou moins le manchon 56 dans la partie tubulaire arrière du piston 20, il est possible de faire varier la distance entre la face avant annulaire 20b du piston 20 et le siège de valve annulaire 20a porté par la partie centrale du piston 20.

Dans ces conditions, la première phase de l'actionnement du frein telle que décrite plus haut est identique,l'effort exercé sur la tige 30 a pour seul effet de rapprocher le clapet 34 du siège 20a du piston 20. Les chambres avant 16 et arrière 18 restent isolées l'une de l'autre et la tige de poussée 46 ne subit aucun déplacement.

Par contre, on a vu plus haut qu'au cours de la deuxième phase d'actionnement du frein, c'est à dire lorsque le clapet 34 est au contact des sièges 20a du piston 20 et 28a du plongeur, de l'air à la pression atmosphérique est admis dans la chambre arrière, ce qui a pour effet d'engendrer une force d'assistance sur le piston 20 qui se déplace alors brusquement vers l'avant jusqu'à ce que la déformation induite du disque de réaction amène la face arrière de ce dernier à venir au contact de la face avant du plongeur 28, c'est à dire à remplir l'espace ou le jeu existant au repos entre ces deux faces représenté par la distance entre la face avant du plongeur 28b et la surface avant annulaire 20b du piston 20.

On comprend donc bien que, dans ces conditions,plus la distance entre cette surface avant annulaire 20b et le siège 20a du piston sera grande, plus,au début de la deuxième phase de fonctionnement, la distance entre la surface avant annulaire 20b du piston et la face avant du plongeur 28 sera grande,et donc plus le saut sera important.Inversement, si, au début de la deuxième phase de fonctionnement, le clapet 34 vient au contact des deux sièges 20a et 28a alors que la face avant du plongeur est toute proche de la face arrière du disque de réaction, le saut sera minime.

On voit donc que, par la rotation du manchon 56 par rapport à la partie tubulaire arrière du piston 20, provoquant son vissage ou son dévissage,on approche ou on éloigne le siège 20a du piston 20 de sa face avant annulaire 20b. On modifie donc à volonté le saut du servomoteur,et ceci sans qu'il soit besoin de le démonter.

Le saut d'un servomoteur tel qu'il vient d'être décrit peut alors être réglé selon un procédé très simple qui va maintenant être exposé. Le saut du servomoteur a été défini comme étant la brusque augmentation de pression intervenant lorsque le clapet 34 vient au contact des deux sièges 20a et 28a, cette augmentation de pression se traduisant par une force d'assistance soudaine exercée par la tige de poussée 46.

Le servomoteur dont on désire régler le saut étant considéré au repos, on applique de l'extérieur un effort égal à la force d'assistance correspondant au saut désiré du servomoteur à sa tige de poussée 46. L'application de cette force extérieure a pour effet de faire se déformer le disque de réaction de la même quantité que lors d'un fonctionnement normal par action sur la tige de commande 30.

Le manchon 56 ayant été vissé au maximum dans la partie tubulaire arrière du piston 20 de façon à éloigner au maximum le siège 20a du clapet 34, on exerce alors une poussée sur la tige de commande 30 jusqu'à ce que la face avant du palpeur 28 vienne au contact du disque de réaction 48 déjà déformé. Cette venue en contact est facilement détectable par tout moyen, par exemple avec une jauge de contrainte. Le siège 20a du piston 20 étant alors le plus proche possible de sa face annulaire avant 20b, on est alors assuré que le clapet 34 n'est au contact que du siège du plongeur 28 et que les chambres avant 16 et arrière 18 sont en communication.

On obture alors de façon étanche l'extrémité arrière du manchon 56, avec un passage étanche pour la tige de commande 30. L'air contenu dans l'espace à l'intérieur du manchon 56 autour de la tige de commande 30 est donc à la pression atmosphérique. On dévisse alors le manchon 56 de façon à rapprocher le siège 20a du clapet 34,déjà en contact avec le siège 28a du plongeur. Au moment où le siège 20a vient au contact du clapet 34 et ensuite écarte légèrement celui-ci du siège 28a du plongeur, la communication s'établit alors entre la chambre arrière 18, qui était sous vide, et l'espace limité à l'intérieur du manchon 56, qui va donc subir une brusque baisse de pression. Il suffit de détecter cette chute de pression par tout moyen, par exemple un manomètre, pour savoir que les deux sièges de clapet 20a et 28a sont alignés.

C'est alors qu'on arrête de tourner le manchon 56, le servomoteur étant alors réglé à la valeur de saut voulue. Il ne suffit plus que d'enlever l'étanchéité qui avait été disposée à l'extrémité arrière du manchon 56, et de cesser d'appliquer des contraintes à la tige de commande 30 et à la tige de poussée 46 pour pouvoir disposer du servomoteur ainsi réglé.

Bien entendu, une fois le saut réglé à la valeur désirée, il est possible d'immobiliser en rotation le manchon 56 par rapport à la partie arrière tubulaire du piston 20, par exemple en vissant sur l'extrémité arrière du manchon 56 qui dépasse de la partie tubulaire du piston 20 une rondelle 70 faisant alors office de contre-écrou.

On a donc bien décrit un procédé simple et efficace pour régler le saut d'un servomoteur,de façon rapide et peu onéreuse, et sans aucune intervention à l'intérieur du servomoteur. Ce procédé peut facilement être automatisé pour une production en série robotisée. On a également décrit un servomoteur dont le saut peut être réglé, sans qu'il soit besoin de le démonter, de façon simple, rapide et fiable selon le procédé de l'invention.

## Revendications

1. Procédé de réglage de la valeur du saut d'un servomoteur d'assistance au freinage, servomoteur dans lequel sont montés de façon mobile un piston creux d'assistance (20), une tige de commande (30) portant un plongeur (28) logé dans le piston (20), l'extrémité arrière du plongeur (28) formant un premier siège de valve annulaire (28a) concentrique à un second siège de valve annulaire (20a) porté par le piston (20) d'assistance, les premier (28a) et second (20a) sièges de valve coopérant avec un clapet annulaire (34) porté par le piston d'assistance (20), un disque de réaction (48) étant interposé entre une face avant annulaire (20b) du piston d'assistance (20) et une face arrière d'une tige de poussée (46), procédé caractérisé en ce qu'il comporte les étapes suivantes :
- appliquer à la tige de poussée (46) un effort égal à la force d'assistance correspondant au saut désiré du servomoteur,
- éloigner le siège (20a) du piston d'assistance (20) du clapet (34),
- mettre en contact la face avant du plongeur (28) et la face arrière du disque de réaction (48) et maintenir ce contact pendant l'étape suivante,
- mettre en contact le second siège (20a) du piston d'assistance (20) avec le clapet (34) pour écarter le clapet (34) du dit premier siège,
- relacher le dit effort.

2. Procédé selon la revendication 1, caractérisé en ce que l'éloignement du second siège (20a) du piston d'assistance (20) du clapet (34)est obtenu par une rotation d'un manchon (56) par rapport au piston d'assistance (20).

3. Procédé selon la revendication 1, caractérisé en ce que la mise en contact du second siège (20a) du piston d'assistance (20) avec le clapet (34) est obtenue par une rotation d'un manchon (56) par rapport au piston d'assistance (20).

4. Procédé selon la revendication 1, caractérisé en ce que la mise en contact du second siège (20a) du piston d'assistance (20) avec le clapet (34) est détectée par la mesure d'une baisse de pression

5. Servomoteur d'assistance au freinage dans lequel sont montés de façon mobile un piston creux d'assistance (20), une tige de commande (30) portant un plongeur (28) logé dans une partie tubulaire arrière du piston (20), l'extrémité arrière du plongeur (28) formant un premier siège de valve annulaire (28a) concentrique à un second siège de valve annulaire (20a) porté par le piston d'assistance (20), les premier (28a) et second (20a) sièges de valve coopérant avec un clapet annulaire (34) porté par le piston d'assistance (20), un disque de réaction (48) étant interposé entre une face avant annulaire (20b) du piston d'assistance (20) et une face arrière d'une tige de poussée (46), caractérisé en ce que la position du second siège de valve (20a) par rapport à la face avant annulaire (20b) du piston d'assistance (20) est réglable.

6. Servomoteur selon la revendication 5, caractérisé en ce que le second siège de valve (20a) est formé sur un élément mobile (56) par rapport au piston d'assistance (20).

7. Servomoteur selon la revendication 6, caractérisé en ce que l'élément mobile (56) par rapport au piston d'assistance (20)est un manchon (56) disposé dans la partie tubulaire arrière du piston (20).

8. Servomoteur selon la revendication 7, caractérisé en ce que le manchon (56) possède un filetage coopérant avec un filetage (54) formé dans la partie tubulaire arrière du piston (20).

9. Servomoteur selon les revendications 1 et 7, caractérisé en ce que le clapet annulaire (34) est à l'intérieur du manchon (56).

10. Servomoteur selon la revendication 9, caractérisé en ce que le réglage de la position du second siège de valve (20a) par rapport à la face avant annulaire (20b) du piston (20) est obtenu par rotation du manchon (56) dans la partie tubulaire arrière du piston (20).

## Claims

1. Process for adjusting the value of the jump of a brake booster, in which booster are mounted movably a hollow booster piston (20) and a control rod (30) carrying a plunger (28) seated in the piston (20), the rear end of the plunger (28) forming a first annular valve seat (28a) concentric with a second annular valve seat (20a) carried by the booster piston (20), the first valve seat (28a) and second valve seat (20a) interacting with an annular shutter (34) carried by the booster piston (20), and a reaction disc (48) being interposed between an annular front face (20b) of the booster piston (20) and a rear face of a push rod (46), said process being characterized in that it comprises the following steps:
- applying to the push rod (46) a force equal to the boost force corresponding to the desired jump of the booster,
- moving the seat (20a) of the booster piston (20) away from the shutter (34),
- putting the front face of the plunger (28) and the rear face of the reaction disc (48) into contact and maintaining this contact during the next step,
- putting the second seat (20a) of the booster piston (20) into contact with the shutter (34) in order to move the shutter (34) away from the said first seat,
- releasing the said force.

2. Process according to claim 1, characterized in that the second seat (20a) of the booster piston (20) is moved away from the shutter (34) as a result of the rotation of a sleeve (56) in relation to the booster piston (20).

3. Process according to claim 1, characterized in that the second seat (20a) of the booster piston (20) is put into contact with the shutter (34) as a result of the rotation of a sleeve (56) in relation to the booster piston (20).

4. Process according to claim 1, characterized in that the putting of the second seat (20a) of the booster piston (20) into contact with the shutter (34) is detected by the measurement of a pressure drop

5. Brake booster, in which are mounted movably a hollow booster piston (20) and a control rod (30) carrying a plunger (28) seated in a rear tubular part of the piston (20), the rear end of the plunger (28) forming a first annular valve seat (28a) concentric with a second annular valve seat (20a) carried by the booster piston (20), the first valve seat (28a) and second valve seat (20a) interacting with an annular shutter (34) carried by the booster piston (20), and a reaction disc (48) being interposed between an annular front face (20b) of the booster piston (20) and a rear face of a push rod (46), characterized in that the position of the second valve seat (20a) in relation to the annular front face (20b) of the booster piston (20) is adjustable.

6. Booster according to claim 5, characterized in that the second valve seat (20a) is formed on an element (56) movable in relation to the booster piston (20).

7. Booster according to claim 6, characterized in that the element (56) movable in relation to the booster piston (20) is a sleeve (56) arranged in the rear tubular part of the piston (20).

8. Booster according to claim 7, characterized in that the sleeve (56) possesses a thread interacting with a thread (54) formed in the rear tubular part of the piston (20).

9. Booster according to claims 1 and 7, characterized in that the annular shutter (34) is within the sleeve (56).

10. Booster according to claim 9, characterized in that the adjustment of the position of the second valve seat (20a) in relation to the annular front face (20b) of the piston (20) is obtained as a result of the rotation of the sleeve (56) in the rear tubular part of the piston (20).

## Patentansprüche

1. Verfahren zum Einstellen des Schwellenwerts eines Bremskraftverstärkers, in dem beweglich ein hohler Hilfskolben (20), eine Steuerstange (30) mit einem in dem Kolben (20) untergebrachten Stößel (28) angebracht sind, wobei das hintere Ende des Stößels (28) einen ersten, ringförmigen Ventilsitz (28a) bildet, der zu einem zweiten, von dem Hilfskolben (20) getragenen Ventilsitz (20a) konzentrisch ist, wobei der erste (28a) und der Zweite Ventilsitz (20a) mit einer von dem Hilfekolben (20) getragenen, ringförmigen Klappe (34) zusammenwirken, wobei eine Gegendruckscheibe (48) zwischen eine ringförmige Vorderseite (20b) des Hilfskolbens (20) und eine Hinterseite einer Schubstange (46) gesetzt ist, wobei das Verfahren dadurch gekennzeichnet ist, daß es die folgenden Schritte aufweist:
- auf die Schubstange (46) wird eine Belastung aufgebracht, die gleich der Hilfskraft ist, die dem gewünschten Schwellenwert des Servomotors entspricht,
- der Sitz (20a) des Hilfskolbens (20) wird von der Klappe (34) entfernt;
- die Vorderseite des Stößels (28) und die Hinterseite der Gegendruckscheibe (48) werden in Kontakt gebracht, und dieser Kontakt wird während des folgenden Schritte aufrechterhalten;
- der zweite Sitz (20a) des Hilfskolbens (20) wird mit der Klappe (34) in Kontakt gebracht, um die Klappe (34) von dem ersten Sitz zu entfernen,
- die Belastung wird gelockert.

2. Verfahren nach Anspruch 1, dadurch gekennzeichnet, daß der zweite Sitz (20a) des Hilfskolbens (20) von der Klappe (34) dadurch entfernt wird, daß eine Hülse (56) bezüglich des Hilfskolbens (20) gedreht wird.

3. Verfahren nach Anspruch 1, dadurch gekennzeichnet, daß der zweite Sitz (20a) des Hilfskolbens (20 dadurch mit der Klappe (34) in Kontakt gebracht wird, daß eine Hülse (56) bezüglich des Hilfskolbens (20) gedreht wird.

4. Verfahren nach Anspruch 1, dadurch gekennzeichnet, daß das Inkontaktbringen des zweiten Sitzes (20a) des Hilfskolbens (20) mit der Klappe (34) durch die Messung einer Drucksenkung erfaßt wird.

5. Bremskraftverstärker, in dem beweglich ein hohler Hilfskolben (20), eine Steuerstange (30) mit einem in einem hinteren rohrförmigen Teil des Kolbens (20) untergebrachten Stößel (28) angebracht sind, wobei das hintere Ende des Stößels (28) einen ersten, ringförmigen Ventilsitz (28a) bildet, der zu einem zweiten, von dem Hilfskolben (20) getragenen Ventilsitz (20a) konzentrisch ist, wobei der erste (28a) und der zweite Ventilsitz (20a) mit einer von dem Hilfskolben (20) getragenen, ringförmigen Klappe (34) zusammenwirken, wobei eine Gegendruckscheibe (48) zwischen eine ringförmige Vorderseite (20b) des Hilfskolbens (20) und eine Hinterseite einer Schubstange (46) gesetzt ist, dadurch gekennzeichnet, daß die Position des zweiten Ventilsitzes (20a) bezüglich der ringförmigen Vorderseite (20b) des Hilfskolbens (20) einstellbar ist.

6. Verstärker nach Anspruch 5, dadurch gekennzeichnet, daß der zweite Ventilsitz (20a) an einem bezüglich des Hilskolbens (20) beweglichen Element (56) gebildet ist.

7. Verstärker nach Anspruch 6, dadurch gekennzeichnet, daß das bezüglich des Hilfskolbens bewegliche Element (56) eine im rohrförmigen hinteren Teil des Kolbens (20) angeordnete Hülse (56) ist.

8. Verstärker nach Anspruch 7, dadurch gekennzeichnet, daß die Hülse (56) ein Gewinde aufweist, das mit einem in dem rohrförmigen hinteren Teil des Kolbens (20) gebildeten Gewinde (54) zusammenwirkt.

9. Verstärker nach den Ansprüchen 1 und 7, dadurch gekennzeichnet, daß sich die ringförmige Klappe (34) im Inneren der Hülse (56) befindet.

10. Verstärker nach Anpruch 9, dadurch gekennzeichnet, daß die Einstellung der Position des zweiten Ventilsitzes (20a) bezüglich der ringförmigen Vorderseite (20b) des Kolbens (20) durch Drehung der Hülse (56) in dem hinteren rohrförmigen Teil des Kolbens (20) erhalten wird.
